Europäisches Patentamt

European Patent Office

Office européen des brevets

(19)

(11) Veröffentlichungsnummer : **0 099 451**
**B1**

(12)

# EUROPÄISCHE PATENTSCHRIFT

(45) Veröffentlichungstag der Patentschrift :
**10.09.86**

(21) Anmeldenummer : **83104210.6**

(22) Anmeldetag : **29.04.83**

(51) Int. Cl.⁴ : **B 60 J 1/17, B 60 R 13/06,
B 62 D 25/04**

(54) **Fahrzeugtür, insbesondere für Personenkraftwagen.**

(30) Priorität : **21.07.82 DE 3227153**

(43) Veröffentlichungstag der Anmeldung :
**01.02.84 Patentblatt 84/05**

(45) Bekanntmachung des Hinweises auf die Patenterteilung : **10.09.86 Patentblatt 86/37**

(84) Benannte Vertragsstaaten :
**BE DE FR GB IT SE**

(56) Entgegenhaltungen :
**EP-A- 0 021 069
EP-A- 0 039 071
EP-A- 0 040 588
EP-A- 0 061 027
EP-A- 0 083 696
DE-A- 2 840 811**

(73) Patentinhaber : **FORD-WERKE AKTIENGESELLS-
CHAFT**
**Ottoplatz 2 Postfach 21 03 69**
**D-5000 Köln 21 (DE)**
**BE DE IT SE**
**FORD MOTOR COMPANY LIMITED**
**Eagle Way**
**Brentwood Essex CM13 3BW (GB)**
**GB**
**FORD FRANCE SOCIETE ANONYME**
**344 Avenue Napoléon Bonaparte B.P. 307**
**F-92506 Rueil Malmaison Cedex (FR)**
**FR**

(72) Erfinder : **Ufrecht, Martin**
**Weissenburgstrasse 43**
**D-5000 Köln 1 (DE)**
Erfinder : **Rest, Heinz**
**Martin-Luther-Strasse 5**
**D-5000 Köln 71 (DE)**

(74) Vertreter : **Ritzkowsky, Harald, Dipl.-Ing.**
**Ford-Werke Aktiengesellschaft Patentabteilung**
**Z/DRR-2 Ottoplatz 2**
**D-5000 Köln 21 (DE)**

## Beschreibung

Die Erfindung geht aus von einer Fahrzeugtür gemäß dem Oberbegriff des Patentanspruchs 1.

Aus der EP-A-0 021 069 ist eine Fahrzeugtür, insbesondere für Personenkraftwagen bekannt, bei der der Hauptkörper der Fahrzeugtür im unteren Bereich aus einem Innenblech und einem Außenblech besteht während der den oberen Rahmenteil einer Fensteröffnung bildende Bereich der Fahrzeugtür aus als Strangpreßteile ausgeführten Führungsleisten besteht, die gleichzeitig diesen Rahmenteil bilden. Hierbei sind an diesen stranggepreßten Führungsleisten innere Flansche vorgesehen, die sich etwa senkrecht zur Scheibenebene einer versenkbaren Fensterscheibe erstrecken sowie äußere Flansche, die parallel zu den Rändern der diese Flansche übergreifenden Fensterscheibe liegen und Tragstege für aufgesetzte Scheibenführungs- und/oder Dichtleisten bilden.

Diese bekannte Fahrzeugtür weist den Nachteil auf, daß das Außenblech in einer aufwendigen Preßoperation hergestellt und mit dem einfacher herzustellenden Innenblech durch eine aufwendige Bördeloperation entlang des Türaußenumfanges verbunden werden muß, wobei dann an diesem Hauptkörper der Fahrzeugtür noch das obere Rahmenteil aus den als Strangpreßteilen ausgeführten Führungsleisten befestigt werden muß.

Diese bekannte Fahrzeugtür ist daher in der Herstellung wesentlich aufwendiger und teurer und bringt bei der Montage Toleranzprobleme und im Betrieb Festigkeitsprobleme mit sich.

Aus der EP-A-00 40 588 ist eine Fahrzeugtür der im Oberbegriff des Patentanspruchs 1 erläuterten Art bekannt, bei der ein Innenblech mit einem Außenblech durch einen entlang des Türaußenumfanges verlaufenden Flansch durch Bördeln und einen entlang des Fensteröffnungsumfanges verlaufenden Flansch durch Punktschweißen verbunden sind. Diese Flansche erstrecken sich hierbei im Wesentlichen parallel zur Außenkontur der Fahrzeugtür.

Diese bekannte Fahrzeugtür weist den Nachteil auf, daß das Außenblech in einer aufwendigen Preßoperation hergestellt und mit dem etwas einfacher herzustellenden Innenblech durch eine aufwendige Bördeloperation entlang des Türaußenumfanges verbunden werden muß, wobei nur an dem entlang des Fensteröffnungsumfanges vorgesehenen, einfachen Flansch eine einfachere Punktschweißoperation ausgeführt werden kann. Für die versenkbaren Scheiben sind hierbei am Fensteröffnungsumfang Führungen vorgesehen, die eine möglichst bündige Anordnung der Scheiben zur Außenkontur des oberen Rahmenteiles der Fahrzeugtüre ermöglichen.

Diese bekannte Fahrzeugtür weist gegenüber der erstgenannten Fahrzeugtür durch das den oberen Rahmenteil mitumfassende Außenblech eine einfachere und billigere Herstellung auf und bereitet bei der Montage geringere Toleranzprobleme, weist jedoch im unteren Bereich der Fahrzeugtür gleichfalls Festigkeitsprobleme auf.

Die Aufgabe der Erfindung ist es, ausgehend von einer Fahrzeugtür gemäß dem Oberbegriff des Patentanspruchs 1, eine verbesserte Fahrzeugtür zu schaffen, deren Hauptstruktur im Wesentlichen aus zwei verhältnismäßig einfachen Blechpreßteilen besteht, die entlang umlaufender Flansche durch einfache Punktschweißoperationen miteinander verbunden werden können und deren oberer Rahmenteil bei angehobenen Scheiben vollständig von diesen überdeckt wird und bei abgesenkten Scheiben dennoch ein stilistisch einwandfreies Aussehen durch aufgesetzte Scheibenführungs- und/oder Dichtleisten aufweist und deren unterer Körperteil durch eine in bekannter Weise lösbar befestigte Innenverkleidung und eine ebenso befestigte Außenverkleidung gebildet wird, so daß ein stilistisch einwandfreies Aussehen der Ränder der Fahrzeugtür ohne aufwendige Bördeloperation erzielt wird, während durch dahinterliegende Kastenträger eine erhöhte Festigkeit der Fahrzeugtür sichergestellt wird.

Die Anordnung der versenkbaren Scheiben in der den oberen Rahmenteil übergreifenden Weise ermöglicht es bei einem viertürigen Kraftfahrzeug die B-Säule vollständig von den beiden angrenzenden Scheiben zu überdecken.

Gemäß der Erfindung wird diese Aufgabe gelöst, indem eine Fahrzeug gemäß dem Oberbegriff des Patentanspruchs 1 die im Kennzeichenteil des Patentanspruchs 1 aufgezeigten Merkmale aufweist.

In den Patentansprüchen 2 bis 7 sind weitere zweckmäßige Ausgestaltungen der Erfindung erläutert.

Dadurch, daß insbesondere die den oberen Rahmenteil bildenden Bereich des Innen- und Außenbleches an ihren inneren Flanschen etwa senkrecht zur Scheibenebene einer versenkbaren Fensterscheibe und an ihren äußeren Flanschen parallel zu den Rändern der diese Flansche übergreifenden Fensterscheibe verlaufen und so Tragstege für aufgesetzte Scheibenführungs- und/oder Dichtleisten bilden, wird einerseits eine einfache Herstellung und Verbindung der die Hauptstruktur der Fahrzeugtür bildenden Innen- und Außenbleche erreicht und darüberhinaus durch die aufgesetzten Scheibenführungs- und Dichtleisten einerseits eine zur Karosseriekontur bündige Führung von den oberen Rahmenteil übergreifenden, versenkbaren Scheiben erzielt und weiterhin auch ein stilistisch einwandfreies Aussehen des oberen Rahmenteiles der Fahrzeugtür bei abgesenkten Scheiben erreicht.

Dadurch, daß das Innenblech eine nach außen offene Schale bildet, die im Bereich des oberen Rahmenteiles einen tieferen, etwa U-förmigen Querschnitt aufweisenden Profilbereich besitzt, der von einem am Außenblech im Bereich des oberen Rahmenteiles gebildeten, einen flacheren, etwa U-förmigen Querschnitt aufweisenden Profilbereich zu einem Kastenträger geschlossen wird, wird ein stabiler, oberer Rahmenteil der Fahrzeugtür gebildet, der unmittelbar mit auf Punktschweißstegen der Karosserieöffnung aufgesetzten Dichtleistenanordnungen zusammenwirkt und eine sichere Abdichtung der Fahrzeugtür gegenüber der Türöffnung in der Karosserie ermöglicht.

Dadurch, daß Innen- und Außenblech auch unterhalb der Fensteröffnung mit einer weiteren, z. B. als Montageöffnung verwendbaren Öffnung versehen sind und so einen unteren Rahmenteil bilden, der im Brüstungsbereich und im Schwellenbereich mit vergrößerten Querschnitten zu Seitenschutzträgern ausgebildet sein kann und an dessen inneren Flanschbereich Fensterbetätigungsvorrichtungen montiert und an dessen äußeren Flanschbereichen eine Innenverkleidung und eine Außenverkleidung lösbar befestigt sind, wird eine Fahrzeugtür geschaffen, deren Hauptstruktur durch zwei über einfache Punktschweißflansche miteinander verbundene Blechpreßteile gebildet wird und die durch die zu befestigenden Innen- und Außenverkleidungsteile eine vielseitige Variationsmöglichkeit in der Fertigung ermöglicht.

Dadurch, daß die auf die Tragstege des Innen- und Außenbleches aufgesetzten Scheibenführungs- und Dichtleisten mit entsprechenden Nuten zur Befestigung an den Flanschen der Hauptstruktur der Fahrzeugtür versehen sind und elastisch federnde Hohlkammern zu Abdichtung und Textilbeflockungen zur Herabsetzung der Gleitreibung aufweisen, können alle Anforderungen an die Führung und Abdichtung versenkbarer Scheiben erfüllt werden.

Die an der Hauptstruktur der Fahrzeutür befestigten Scheibenführungs- und/oder Dichtleisten können hierbei mit an den versenkbaren Scheiben durchgehend befestigten, einen doppelt-U-förmigen Querschnitt aufweisenden Rand-leisten oder nur mit in Abständen an der Scheibe angeordneten entsprechenden Führungsklammern zusammenwirken.

Die Gestaltung der Scheibenführungs- und/oder Dichtleisten kann hierbei stilistischen Gesichtspunkten Rechnung tragen, so daß bei abgesenkten Scheiben die freigelegten Scheibenführungs- und/oder Dichtleisten einen z. B. durch Längsrillen aufgelockerten schwarzen Rahmenbereich bilden.

Die Erfindung wird anhand in den Zeichnungen gezeigten Ausführungsbeispieles näher erläutert.

Es zeigt:

Figur 1 eine im wesentlichen schematische Seitenansicht der Fahrzeugtüren einer viertürigen Kraftfahrzeugkarosserie in der die verschiedenen Schnitte durch die Randbereiche der Fahrzeugtür angegeben sind;

Figur 2 einen horizontalen Schnitt entlang der Linie II-II;

Figur 3 einen horizontalen Schnitt entlang der Linie III-III;

Figur 4 einen vertikalen Schnitt entlang der Linie IV-IV;

Figur 5 einen horizontalen Schnitt entlang der Linie V-V;

Figur 6 einen horizontalen Schnitt entlang der Linie VI-VI;

Figur 7 einen vertikalen Schnitt entlang der Linie VII-VII;

Figur 8 einen vertikalen Schnitt entlang der Linie VIII-VIII;

Figur 9 einen ähnlichen Schnitt wie in Fig. 5 jedoch einer anderen Ausführung einer Führungsklammer und

Figur 10 eine Ansicht der versenkbaren Scheibenecke mit der Führungsklammer nach Fig. 9.

Die Fahrzeugtür 1 besteht im wesentlichen aus einem Innenblech 2 und einem Außenblech 3, die entlang eines am Türaußenumfang 4 und eines am Fensteröffnungsumfang 5 verlaufenden Flansch, sowie gegebenenfalls eines entlang des Umfanges einer weiteren Öffnung 6 verlaufenden Flansches miteinander durch Punktschweißen verbunden sind. Die den Fensterrahmen bzw. den oberen Rahmenteil 7 der Fahrzeugtür 1 bildenden Teile des Innenbleches 2 und des Außenbleches 3 weisen vordere, schräge, äußere und innere Flanschbereiche 8 und 9, obere, horizontale, äußere und innere Flanschbereich 10 und 11 und hintere, vertikale äußere und innere Flanschbereiche 12 und 13 auf.

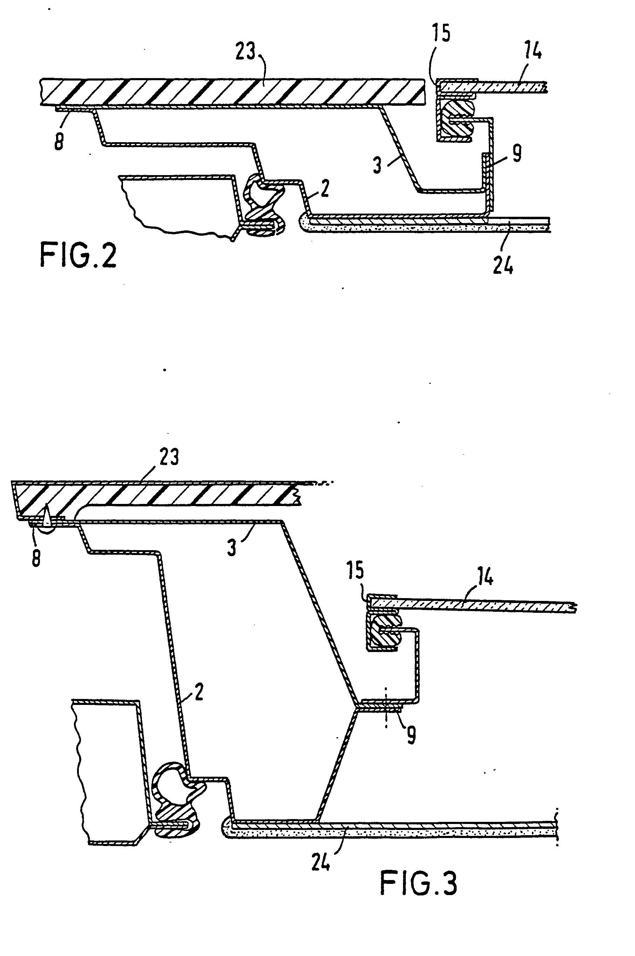

Wie insbesondere aus den Figuren 2 bis 5 zu ersehen ist, erstrecken sich die inneren Flanschbereich 9, 11 und 13, senkrecht zur Scheibenebene einer versenkbaren Fensterscheibe 14, während sich die äußeren Flanschbereich 8, 10 und 12 parallel zu den Rändern 15 der diese Flansche übergreifenden Fensterscheibe 14 erstrecken und so Tragstege für aufgesetzte Scheibenführungs-und Dichtleisten 16 und 17 bzw. für einen Außenspiegel-Befestigungsteil bilden.

Die den oberen Rahmenteil 7 der Fahrzeugtür 1 bildenden Bereiche des Innenbleches 2 und des Außenbleches 3 sind derart ausgebildet, daß das Innenblech 2 im Bereich der Fensteröffnung einen tiefen, etwa U-förmigen Querschnitt bildet, während das Außenblech 3 einen flachen, etwa U-förmigen Querschnitt bildet, der das Innenblech 2 zu einem Kastenträger ergänzt. Der obere Rahmenteil 7 der Fahrzeugtür 1 kann somit maßhaltig und steif ausgebildet sein, wodurch eine gute Abdichtung an den üblichen an Punktschweißstegen der Karosserieöffnung befestigten Dichtungsanordnungen sichergestellt wird.

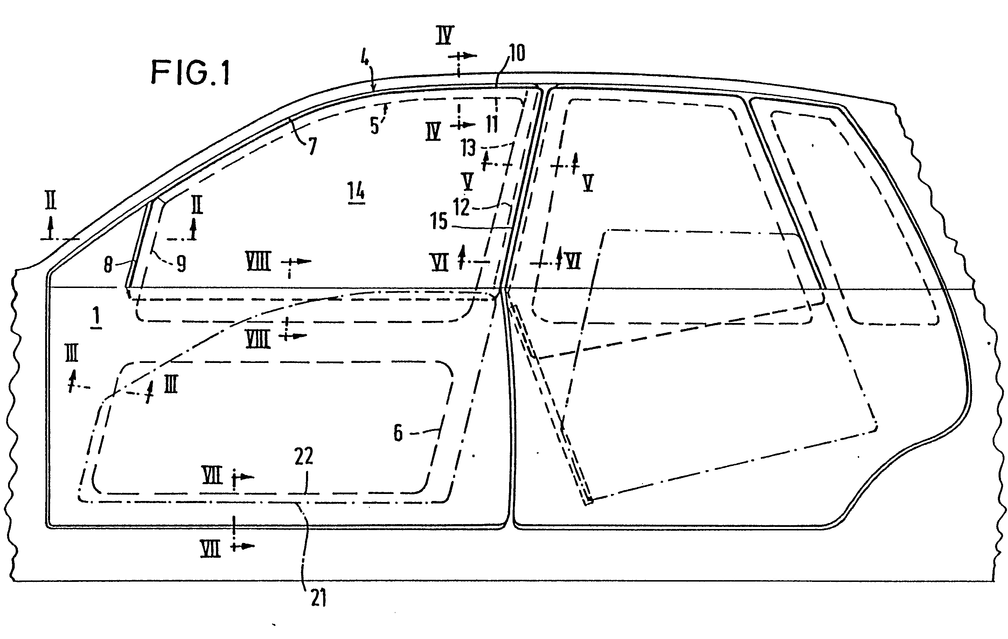

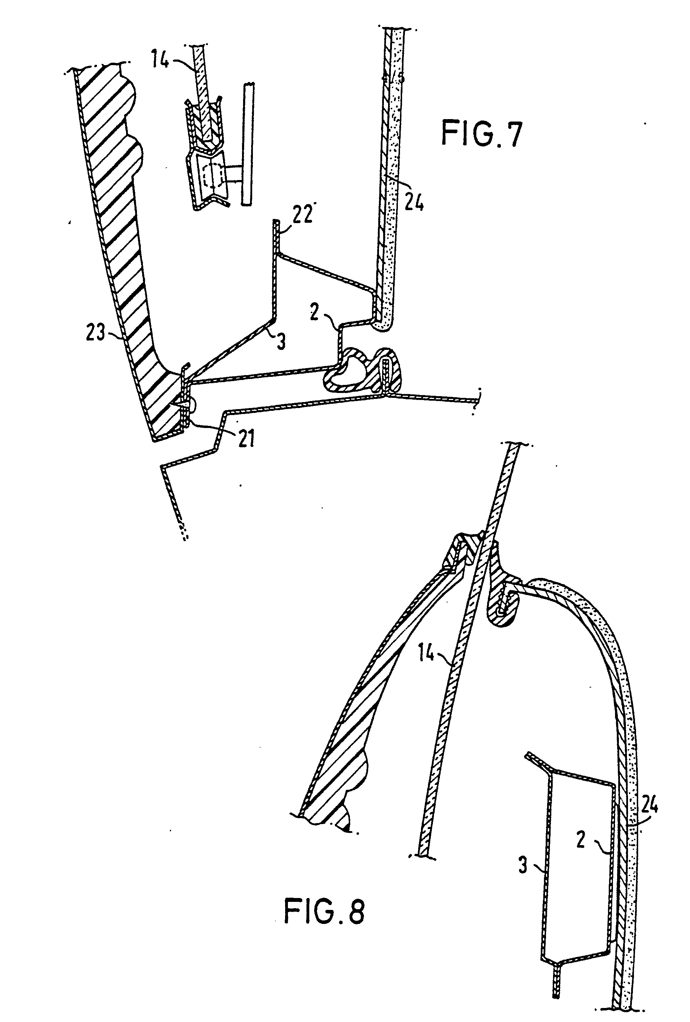

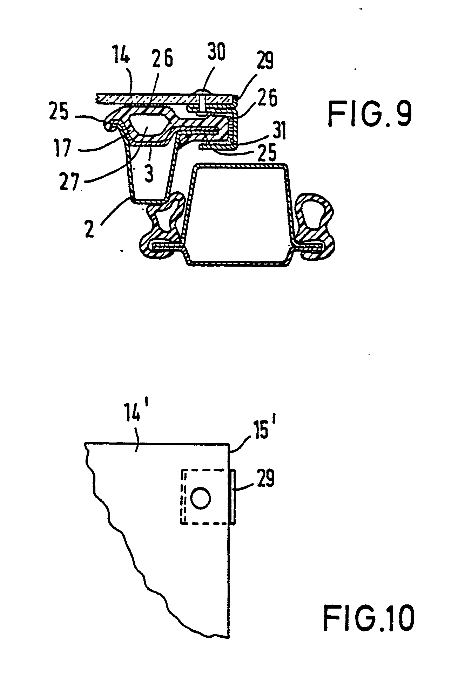

Die Fahrzeugtür 1 kann neben der Fensteröffnung auch eine unterhalb der Gürtellinie, in Fig. 1 in gestrichelten Linien angedeutete weitere Öffnung 6 aufweisen, die z. B. als Montageöffnung verwendet werden kann, wobei die Flansche in ähnlicher Weise wie an der Fensteröffnung angeordnet und durch Punktschweißen miteinander verbunden sein können. Wie aus den Figuren 8 und 9 zu erkennen ist, kann der so gebildete untere Rahmenteil im Brüstungsbereich und im Schwellerbereich als Seitenschutzträger ausgebildet sein. Die einteilige Ausführung des Innenbleches 2 und des Außenbleches 3 als großformatiges Blechpreßteil ermöglicht in einfacher Weise die Anordnung entsprechend ausgelegter, großformatiger Kastenträger.

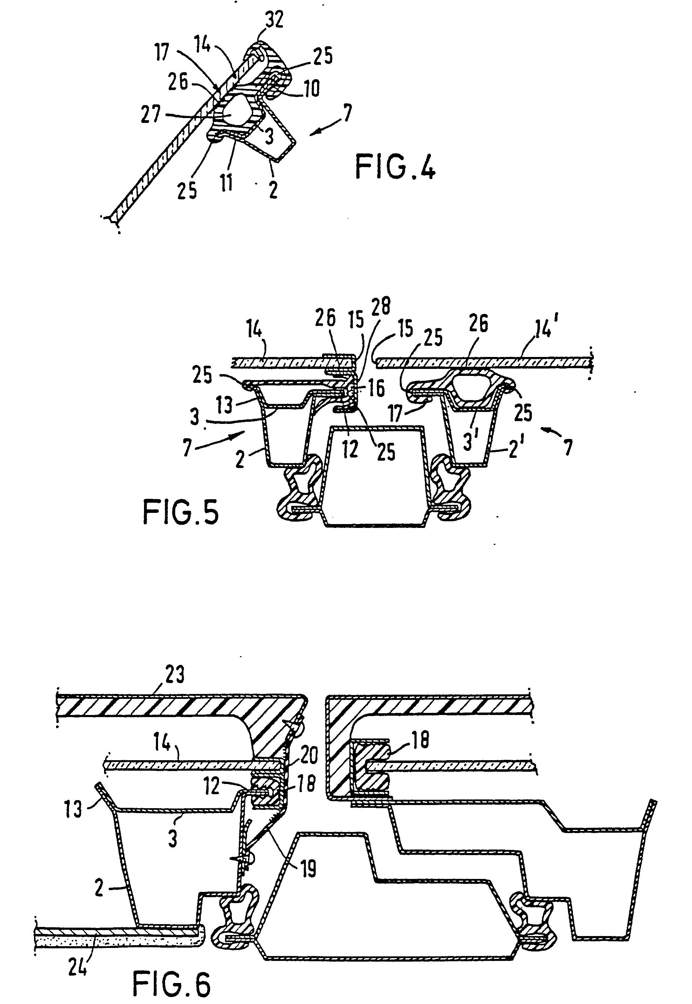

Wie sich aus einem Vergleich der Figuren 4 bis 5 mit Figur 6 ergibt, sind unterschiedliche Scheibenführungs- und Dichtungsleisten 16 bzw. 17 nur im oberen Rahmenteil 7 aufwendig ausgeführt, da sie hier bei versenkter Scheibe sichtbar sind wohingegen sie im Innern des Türkörpers zu einfacheren Führungsleisten 18 reduziert sind.

In Fig. 6 ist noch auf eine weitere Besonderheit hinzuweisen. Dadurch, daß die versenkbaren Scheiben 14 den oberen Rahmenteil 7 der Fahrzeugtür 1 übergreifend und eventuell die gesamte B-Säule abdeckend angeordnet sind, muß im Türkörper auch ein entsprechender Unterbringungsraum sichergestellt werden. Im vorliegenden Fall erfolgt dies durch eine, eine innere textile Beflockung 19 aufweisende Ausweichtasche 20, aus elastischem Material, die im Bereich der Türstirnseite einerseits an einem Außenverkleidungsteil 23 und andererseits an einem Innenverkleidungsteil 24 befestigt ist.

Wie aus Fig. 7 zu ersehen ist, können das Innenblech 2 und das Außenblech 3 eine untere Seitenschutzverstärkung bilden, deren äußerer Flanschbereich 21 zur Befestigung eines Außenverkleidungsteils 23, z. B. in Form eines Sandwich-Bauteiles dienen kann, während an dessen innerem Flanschbereich 22 in Höhe des oberen Trägers ein nur schematisch angedeuteter Fensterhebemechanismus befestigt sein kann. Ein Innenverkleidungsteil 24 kann in bekannter Weise lösbar am Innenblech 2 befestigt sein.

Wie aus den Figuren 4 und 5 zu ersehen ist, kann entweder eine Scheibenführungsleiste 16 oder eine Scheibenführungs- und Dichtungsleiste 17 Verwendung finden. Beide Leisten 16 und 17 sind mit entsprechenden Nuten oder Haken 25 versehen, mittels denen sie auf den entsprechenden äußeren und inneren Flanschbereichen 12 und 13 aufgesetzt werden können. Die Scheibenführungsleisten 16 sowie die Scheibendichtungsleisten 17 sind in ihrem Führungs- bzw. Dichtungsbereich mit einer bekannten textilen Beflockung 26 versehen. Bei der Scheibendichtungsleiste 17 ist eine elastisch federnde Hohlkammer 27 vorgesehen, die die textile Beflockung 26 in Anlage gegen die Fensterscheibe 14 drückt.

Die Führung der Fensterscheibe 14 erfolgt entweder wie aus der Figur 5 zu ersehen ist über eine Randleiste 28, die ein doppelt-U-förmiges Profil aufweist un mit ihrem U-Kanal am Rand 15 der Fensterscheibe 14 befestigt ist, während sie mit ihrem anderen U-förmigen Kanal den Führungsbereich der Führungsleiste 16 umfaßt und mit diesem gleitend und abdichtend zusammenwirkt.

Die Führung der Fensterscheibe 14' kann wie aus dem rechten Teil der Figur 5 in Verbindung mit den Figuren 9 und 10 zu ersehen ist, über eine im Abstand am Rand 15' der Scheibe 14' befestigten Führungsklammer 29 erfolgen, die durch Kleben oder durch einen Bolzen 30 festgelegt ist und einen U-förmigen Abschnitt 31 aufweist, mit dem sie den Führungsbereich der Scheibenführungs- und Dichtleiste 17 umfaßt. Da in diesem Fall eine Abdichtung entlang des Randbereiches der Scheibe 14' nicht erfolgt, ist an der Scheibenführungs- und Dichtleiste 17 eine elastische federnde Hohlkammer 27 vorgesehen, die einen mit einer Textilen Beflockung 26 versehenen Dichtungsbereich gegen die Scheibe 14' drückt.

Wie aus Fig. 4 zu ersehen ist, kann eine am oberen Rand der Scheibe 14 angeordnete Scheibenführungs- und Dichtleiste 17' in ähnlicher Weise wie in der Figur 5 gezeigt ausgebildet sein, wobei sie an ihren den äußeren Flansch 10 übergreifenden Teil mit einer schwenkbeweglichen Dichtleiste 32 versehen sein kann. Die Nut 25 der Scheibenführungs- und Dichtleiste 17' vermeidet hierbei an Abziehen der Dichtungsleiste beim Hochbewegen der Scheibe 14.

Die entsprechenden Scheibenführungs- und/ oder Dichtleisten können hierbei in ihrem von außen sichtbaren Bereich so gestaltet werden, daß sie bei versenkten Fensterscheiben eine stilistisch einwandfreie Ansicht vermitteln. Daher brauchen auch die den oberen Rahmenteil übergreifenden Bereiche der Fensterscheiben nicht mit einem innenseitigen Farbauftrag abgedeckt werden, der sich insbesondere beim oberen Randbereich der Fensterscheibe bei teilweise abgesenkter Fensterscheibe störend bemerkbar machen würde.

## Patentansprüche

1. Fahrzeugtür, insbesondere für Personenkraftwagen, die aus zumindest einem Innenblech und einem Außenblech besteht und bei der diese Bleche entlang von am Türaußenumfang und entlang von am Fensteröffnungsumfang verlaufenden Flanschen durch Punktschweißen miteinander verbunden sind, dadurch gekennzeichnet, daß sowohl die den oberen Rahmenteil (7) der Fensteröffnung als auch die Rahmenteile einer Montageöffnung (6) bildenden Bereiche des Innenbleches (2) nach außen offene Blechpreßprofile bilden, die im Innenblech (2) im Bereiche des oberen Rahmenteiles (7) der Fensteröffnung einen tiefen und schmalen U-förmigen Profilbereich und im Bereich des unteren Rahmenteiles der Montageöffnung (6) einen flacheren U-förmigen Profilbereich aufweisen und wobei das Innenblech (2) durch das Außenblech (3) im oberen Rahmenteil (7) durch flachere U-förmige Profilbereich und im unteren Rahmenteil durch breitere Profilbereiche zu Kastenträgern ergänzt ist, wobei die oberen Rahmenteile (7) mit ihren inneren Flanschen (9, 11 und 13) etwa senkrecht zur Scheibenebene einer versenkbaren Fensterscheibe (14) und mit ihren äußeren Flanschen (8, 10 und 12) parallel zu den Rändern (15) der diese Flansche übergreifenden Fensterscheibe (14) liegen und Tragstege für aufgesetzte Scheibenführungs- und/oder Dichtleisten (16 bzw. 17) bilden und der untere Rahmenteil von einer seine Flansche (8 bzw. 21) übergreifenden Außenverkleidung (23) abgedeckt ist.

2. Fahrzeugtür nach Anspruch 1, dadurch gekennzeichnet, daß das Innen-, als auch das Außenblech (2 und 3) unterhalb der Fensteröffnung (5) bzw. der Montageöffnung untere Rahmenteile bilden, die im Brüstungsbereich und im Schwellerbereich verstärkte Seitenschutzträger ausgebildet sein können und an dessen äußerem Flanschbereich (21) ein z. B. als Sandwich-Bauteil ausgebildeter Außenverkleidungsteil (23) befestigt ist.

3. Fahrzeugtür nach den Ansprüchen 1 oder 2, dadurch gekennzeichnet, daß die auf die Tragstege aufgesetzten Scheibenführungs- und/oder Dichtleisten (16 bzw. 17) mit entsprechenden Aufnahmenuten bzw. Rasthaken (25) versehen sind.

4. Fahrzeugtür nach den Ansprüchen 1 bis 3, dadurch gekennzeichnet, daß die auf die Tragstege aufgesetzten Scheibenführungs- und Dichtleisten (17 und 17') eine elastisch federnde Hohlkammer (27) aufweisen.

5. Fahrzeugtür nach den Ansprüchen 1 bis 4, dadurch gekennzeichnet, daß die Scheibenführungs- und/oder Dichtleisten (16 bzw. 17) in ihrem Führungsbereich und eventuell in ihrem Dichtungsbereich mit einer textilen Beflockung (26) versehen sind.

6. Fahrzeugtür nach den Ansprüchen 1 bis 5, dadurch gekennzeichnet, daß die Scheibenführungs- und/oder Dichtleisten (16 bzw. 17) mit an der Scheibe (14) entlang ihrer vertikalen Ränder (15) befestigten, einen doppelt-U-förmigen Querschnitt aufweisenden Randleisten (28) zusammenwirken.

7. Fahrzeugtür nach den Ansprüchen 1 bis 5, dadurch gekennzeichnet, daß die Scheibenführungs- und Dichtleiste (17) mit an der Scheibe (14) im Abstand fest angeordneten (z. B. Bolzen 30) Führungsklammern (29) zusammenwirkt.

**Claims**

1. A vehicle door, especially for motor cars, which consists of at least one inner sheet and one outer sheet and where these sheets are spotwelded one to the other along flanges passing about the outer periphery of the door and the periphery of the window opening, characterized in that the areas of the inner sheet (2) forming both the upper frame portion (7) of the window opening and the frame portions of an access opening (6) constitute outwardly open press profiles which in the inner sheet (2) exhibit a deep and narrow U-shaped profile region in the area of the upper frame portion (7) of the window opening and a shallower U-shaped profile region in the area of the lower frame portion of the access opening (6) and where the inner sheet (2) is supplemented by the outer sheet (3) in the upper frame portion (7) by shallower U-shaped profile regions and in the lower frame portion by broader profile regions to form box girders, the upper frame portions (7) lying with their inner flanges (9, 10 and 13) approximately normal to the plane of a drop-window pane (14) and with their outer flanges (8, 10 and 12) parallel to the edges (15) of the window pane (14) which overlaps these flanges, the upper frame portions forming supporting edges for pane-guiding and/or sealing strips (16, 17) seated on them, and the lower frame portion being masked by an outer facing (23) which overlaps its flanges (8, 21).

2. A vehicle door according to claim 1, characterized in that both the inner and the outer sheet (2 and 3) form underneath the window opening (5) and, respectively, the access opening (7) lower frame portions which can be executed in the parapet region and in the rocker region as reinforced side protection beams and on whose outer flange region (21) an outer facing portion (23) is fixed, for instance in the form of a laminated component.

3. A vehicle door according to claim 1 or 2, characterized in that the pane-guiding and/or sealing strips (16, 17) seated on the supporting edges are provided with appropriate receiving grooves or retaining lugs (25).

4. A vehicle door according to claims 1 through 3, characterized in that the pane-guiding and sealing strips (17 and 17') seated on the supporting edges comprise a resilient hollow chamber (27).

5. A vehicle door according to claims 1 through 4, characterized in that the pane-guiding and/or sealing strips (16, 17) are provided in their guiding region and possibly in their sealing region with a textile flocking (26).

6. A vehicle door according to claims 1 through 5, characterized in that the pane-guiding and/or sealing strips (16, 17) cooperate with edge strips (28), double-U-shaped in cross section and attached to the pane (14) along its vertical edges (15).

7. A vehicle door according to claims 1 through 5, characterized in that the pane-guiding and sealing strip (17) cooperates with guide clamps (29) spaced from each other and fixed (e. g., with bolts 30) to the pane.

**Revendications**

1. Porte de véhicule automobile (1), notamment pour voitures de tourisme, comportant au moins une tôle intérieure (2) et une tôle extérieure (3) et dans laquelle ces tôles sont assemblées entre elles par soudage par points le long de rebords entourant le périmètre extérieur de la porte (4) et le long du pourtour de l'ouverture de fenêtre (5) caractérisée en ce que les zones de la tôle intérieure (2) constituant la partie supérieure de l'encadrement (7) de l'ouverture de fenêtre ainsi que les éléments d'encadrement d'une ouverture de montage (6), forment des profils en tôle emboutie ouverts vers l'extérieur lesquels présentent dans la tôle intérieure (2), au niveau de la partie supérieure de l'encadrement (7) de l'ouverture de fenêtre, un profil creux et étroit en U, et dans la zone de la partie inférieure de l'encadrement de l'ouverture de montage (6), un profil plat en U, la tôle intérieure (2) formant avec la tôle extérieure (3) des poutres en caissons, dans la partie supérieure de l'encadrement (7) par des profils plats en U et dans la partie inférieure de l'encadrement par des profils larges, les parties supérieures d'encadrement (7) étant, par leurs rebords inférieurs (9, 11 et 13) approximativement perpendiculaires au plan d'une vitre descendante (14), et par leurs rebords extérieurs (8, 10 et 12) parallèles aux bords (15) de la vitre (14) recouvrant ces rebords, et formant des barrettes de support de baguettes rapportées de guidage de vitre et/ou d'étanchéité (16 ou 17), et la partie inférieure de l'encadrement étant masquée par un habillage extérieur (23) recouvrant ses rebords (8 ou 21).

2. Porte de véhicule automobile selon la revendication 1, caractérisée en ce que la tôle intérieure et la tôle extérieure (2 et 3) forment, au-dessous de l'ouverture de fenêtre (5) ou de l'ouverture de montage (6), des parties inférieures d'encadrement qui peuvent être conformées en poutres latérales renforcées dans la zone d'appui et dans la zone du seuil, et en ce que sur la zone des rebords extérieurs dudit encadrement (21), est fixé un élément d'habillage extérieur (23), conformé par exemple en élément sandwich.

3. Porte de véhicule automobile selon les revendications 1 ou 2, caractérisée en ce que les baguettes de guidage de vitre et/ou d'étanchéité (16 ou 17) montées sur les barrettes de support, sont pourvues de rainures ou de crochets (25) appropriés.

4. Porte de véhicule automobile selon les revendications 1 à 3, caractérisée en ce que les baguettes de guidage de vitre et d'étanchéité (17 et 17') montées sur les barrettes support comportent une chambre creuse élastique 27.

5. Porte de véhicule automobile selon les revendications 1 à 4, caractérisée en ce que les baguettes de guidage de vitre et/ou d'étanchéité (16 ou 17) sont pourvues d'un flocage textile (26) dans leurs zones de guidage et éventuellement dans leurs zones d'étanchéité.

6. Porte de véhicule automobile selon les revendications 1 à 5, caractérisée en ce que les baguettes de guidage de vitre et/ou d'étanchéité (16 ou 17) coopèrent avec des baguettes de bordure présentant une section en double U, fixées sur la vitre (14), le long de ses bords verticaux (15).

7. Porte de véhicule automobile selon les revendications 1 à 5, caractérisée en ce que la baguette de guidage de vitre et d'étanchéité (17) coopère avec des agrafes de guidage (29) maintenues fermement (par exemple par un boulon 30) sur la vitre (14), à intervalles réguliers.

FIG.1

0 099 451

0 099 451

FIG.2

FIG.3

2

FIG.4

FIG.5

FIG.6

FIG.7

FIG.8

FIG.9

FIG.10